## Europäisches Patentamt
## European Patent Office
## Office européen des brevets

(11) Veröffentlichungsnummer: **0 357 959 B1**

(12) **EUROPÄISCHE PATENTSCHRIFT**

(45) Veröffentlichungstag der Patentschrift: **09.06.93**

(51) Int. Cl.5: **C01G 23/00**, C04B 35/46

(21) Anmeldenummer: **89114308.3**

(22) Anmeldetag: **03.08.89**

(54) **Sinterbares Rohstoffpulver, auf Basis von Aluminiumtitanat, Verfahren zu seiner Herstellung sowie daraus hergestellte Sinterformkörper und deren Verwendung.**

(30) Priorität: **16.08.88 DE 3827646**

(43) Veröffentlichungstag der Anmeldung:
**14.03.90 Patentblatt 90/11**

(45) Bekanntmachung des Hinweises auf die
Patenterteilung:
**09.06.93 Patentblatt 93/23**

(84) Benannte Vertragsstaaten:
**DE FR GB IT NL SE**

(56) Entgegenhaltungen:
**EP-A- 0 231 006**
**DE-A- 3 725 170**
**DE-C- 3 706 207**
**FR-A- 2 402 630**
**FR-A- 2 609 021**

**PATENT ABSTRACTS OF JAPAN, Band 5, Nr. 28 (C-44)[700], 20. Februar 1981.**

(73) Patentinhaber: **BAYER AG**

**W-5090 Leverkusen 1 Bayerwerk(DE)**

(72) Erfinder: **Thometzek, Peter, Dr.**
**Buschstrasse 169**
**W-4150 Krefeld(DE)**
Erfinder: **Freudenberg, Bernhard, Dr.**
**Sesslacher Weg 11**
**W-8630 Coburg(DE)**

## Beschreibung

Die vorliegende Erfindung betrifft ein sinterbares Rohstoffpulver für die Keramik auf Aluminiumtitanatbasis, bestehend aus Teilchen mit einem Oxid-, Oxidhydrat- bzw. Hydroxidkern der Elemente Aluminium oder Titan und einer Auffällung von schwerlöslichen Verbindungen des jeweils anderen Elements und schwerlöslichen Verbindungen weiterer Elemente, wobei das molare Verhältnis von Titan zu Aluminium von 1:0,1 bis 1:30 beträgt, Verfahren zur Herstellung dieses Rohstoffpulvers, daraus hergestellte Sinterformkörper sowie deren Verwendung.

In der Technik besteht ein Bedarf an thermoschockbeständigen Werkstoffen, die auch für Einsatztemperaturen von >900°C geeignet sind und gleichzeitig durch ein hohes Festigkeitsniveau ingenieurmäßige Konstruktionen erlauben wie in der Schmelzmetallurgie z.B. für Durchflußregler, im Apparatebau z.B. Heißgasventilatoren, im Motorenbau z.B. thermische Isolationen des Abgaskanals (Portliner), in der chemischen Technik z.B. als Filter oder Katalysatorträger.

Keramik auf der Basis von reinem Aluminiumtitanat oder Tialit zeigt zwar interessante Eigenschaften wie einen kleinen Wärmeausdehnungskoeffizienten (WAK) und einen kleinen E-Modul. Jedoch sind diese technologisch nur bedingt verwertbar, aufgrund der sehr geringen Festigkeit und der Zersetzungsneigung im Temperaturbereich von ca. 900 bis ca. 1300°C. In diesem Temperaturintervall zerfällt Tialit in die Ausgangsoxide $Al_2O_3$ und $TiO_2$, was einhergeht mit einem starken Anstieg des WAK.

Zur Herstellung eines sinterfähigen Aluminiumtitanatpulvers wird gemäß der DE-C 2 345 778 = US-A 3 825 653 vorgeschlagen, Halogene, Nitrate oder Alkoxyverbindungen von Aluminium und Titan als Hydroxid zu kopräzipitieren und das Kopräzipitat nach Trocknung und Kalzinierung zum Sintern von Aluminiumtitanatprodukten zu verwenden. Die auf diese Weise hergestellten Produkte sollen im Temperaturbereich von 25 bis 1000°C eine thermische Längenausdehnung von weniger als $1 \times 10^{-6}/°C$ aufweisen. Es werden Abmischungen im Verhältnis $Al_2O_3$ zu $TiO_2$ von 1:1, 1:3 bis 3:1 angegeben. Eine Zumischung anderer Elementverbindungen ist nicht angesprochen. Die Druckfestigkeit liegt lediglich bei 34,5 MPa. Das in der DE-C 2 345 778 beschriebene Pulver wird gemäß der US-A 3 825 653 zur Herstellung von Schmelztiegeln für Uran und Uranlegierungen eingesetzt. Bei der Herstellung nach dem Heißpreßverfahren wird ein äquimolares Verhältnis von $Al_2O_3$ zu $TiO_2$ als geeignet angesehen. Die kopräzipierten Pulver ergeben beim Sinterprozeß aufgrund ihrer geringen Gründichte, bedingt durch die sehr kleine Teilchengröße, nach Kalzination eine Schwindung von 50 %.

Wie sich aus der US-A 3 607 343 ergibt, sind $Al_2O_3$-Partikel mit einer Menge von 1 bis 50 Vol.-% $TiO_2$ im Flammsprühverfahren (Plasmasprühen) versehen worden. Die $Al_2O_3$-Teilchen wurden unter Zusatz eines geeigneten Bindemittels, z.B. auf der Basis eines Phenolharzes, zur Reaktion eingesetzt.

P.A. Brugger und A. Mocellin in Journal of Materials Science 21 (1986) 4431-4435 versehen $Al_2O_3$- bzw. $TiO_2$-Teilchen mit dem jeweils anderen Element durch hydrolytische Zersetzung der entsprechenden metallorganischen Alkoholatverbindung. H. Okamura, E.A. Barringer und H.K. Bowen bringen laut J. Am. Ceram. Soc. 69 [2], C22-C24 (1986) ebenfalls auf $Al_2O_3$-Teilchen Titanoxidhydrat durch stufenweise Hydrolyse einer Titanalkoholatlösung auf. Die Kosten der Metallalkoholate sowie die komplizierte Durchführung der Reaktionen sprechen gegen eine industrielle Verwertbarkeit.

Von S. Kratohvil und E. Matijevic wird in Advanced Ceramic Materials 2 (4) 798-803 (1987) die Umhüllung von $TiO_2$-Teilchen mit einer Aluminiumoxid-Komponente aus $Al_2(SO_4)_3$-Lösung mit Hilfe von Harnstoff beschrieben.

Aufgrund der niedrigen Konzentration der eingesetzten $Al_2(SO_4)_3$-Lösungen als auch der hohen Menge an Harnstoff ist diese Methode für einen industriellen Einsatz uninteressant.

L.I. Bekkerman untersuchte in Zhurnal Prikladnoi Khimii, Vol. 58, No. 10, pp. 2207-2211, Oktober 1985 die Fällung kleiner Mengen Aluminiumhydroxid (0,58- 3,03 Gew.-% bezogen auf $TiO_2$) auf vorgelegtes $TiO_2$- Pigment.

E. Kato, K. Daimon, J. Takahashu, R. Kato und K. Hamano beschrieben im Report of the Research Laboratory of Engineering Materials, Tokyo Institute of Technology 9, 1984, 75-86 die Herstellung eines $Al_2TiO_5$-Rohstoffpulvers durch Behandlung einer Lösung aus $TiOSO_4$ und $Al_2(SO_4)_3$ bei höheren Temperaturen im Vakuumverdampfer. Nachteilig bei diesem Verfahren ist zum einen die erhebliche Menge an $SO_2$, die als gasförmiges Spaltprodukt bei der Reaktion entsteht, zum anderen die hohe Schwindung beim Sintern der Pulver.

Es sind zahlreiche Vorschläge für die Herstellung von Keramik auf der Basis von Aluminiumtitanat gemacht worden, wobei die Ausgangskomponenten $Al_2O_3$, $TiO_2$, sowie in exakt festgelegter Menge ein oder mehrere geeignete Zusätze vor der keramischen Aufarbeitung getrennt in den Versatz eingebracht wurden. Der Stand der Technik hierzu wird z.B. in der DE-C 3 706 209 beschrieben.

Aufgabe dieser Erfindung ist die Bereitstellung von entsprechenden Rohstoffpulvern, die die beschriebenen Nachteile nicht aufweisen. Es wurde nun gefunden, daß diese Forderungen erfüllt werden von Rohstoffpulvern auf Aluminiumtitanatbasis, die neben den Tialitkomponenten $TiO_2$ und $Al_2O_3$ weitere geeignete Elementoxide in möglichst homogener Verteilung eingebracht aufweisen. Gegenstand der Erfindung ist somit ein sinterbares Rohstoffpulver für die Keramik auf Aluminiumtitanatbasis, bestehend aus Teilchen mit einem Oxid-, Oxidhydrat- bzw. Hydroxidkern der Elemente Aluminium oder Titan und einer Auffällung von schwerlöslichen Verbindungen des jeweils anderen Elements und schwerlöslichen Verbindungen weiterer Elemente, wobei das molare Verhältnis von Titan zu Aluminium von 1:0,1 bis 1:30 beträgt, welches zusätzlich Auffällungen einer oder mehrerer weiterer schwerlöslicher Elementverbindungen in einer Menge von jeweils 0,1 bis 50 Gew.-%, bevorzugt 0,2 bis 25 Gew.-%, berechnet als Elementoxid und bezogen auf die Gesamtmenge, enthält, wobei die schwerlöslichen Verbindungen der zusätzlichen Auffällung Oxide, Oxidhydrate und/oder Hydroxide der Elemente Magnesium, Kalzium, Silizium, Zinn, Yttrium, Zirkonium, Niob, Tantal, Eisen, Kobalt, Nickel, Chrom, Kupfer, Zink und/oder Seltenerdelemente sind. Die Gesamtmenge der zusätzlichen Auffällungen sollte nicht größer als 65 %, bevorzugt zwischen 0,2 und 35 %, liegen. In einer weiteren bevorzugten Ausführungsform handelt es sich bei den Kernteilchen um $TiO_2$-Partikel wie feinteiliges Titandioxid bzw. Titandioxidhydrat, Hydrolysatschlamm aus der $TiO_2$-Pigment-Produktion bzw. kalziniertes Titandioxid in Form von Rutil oder Anatas.

Ebenso bevorzugt kann es sich bei den Kernteilchen um eine der Modifikationen von $Al(OH)_3$, $AlOOH$ und/oder $Al_2O_3$ handeln.

Gegenstand dieser Erfindung ist auch ein Verfahren zur Herstellung der erfindungsgemäßen Rohstoffpulver, wobei auf Oxid-, Oxidhydrat und/oder Hydroxidkerne der Elemente Aluminium oder Titan eine Auffällung von schwerlöslichen Verbindungen des jeweils anderen Elementes aufgebracht ist und das molare Verhältnis von Titan zu Aluminium von 1:0,1 bis 1:30 beträgt, welches dadurch gekennzeichnet ist, daß zusätzlich Auffällungen einer und/oder mehrerer weiterer schwerlöslicher Elementverbindungen in einer Gesamtmenge von jeweils 0,1 bis 65 Gew.-%, bevorzugt 0,2 bis 35 Gew.-%, berechnet als Elementoxid und bezogen auf die Gesamtmenge, aufgebracht werden, wobei die schwerlöslichen Verbindungen der zusätzlichen Auffällung Oxide, Oxidhydrate und/oder Hydroxide der Elemente Magnesium, Kalzium, Silizium, Zinn, Yttrium, Zirkonium, Niob, Tantal, Eisen, Kobalt, Nickel, Chrom, Kupfer, Zirk und/oder Seltenerdelemente sind.

Überraschenderweise gelingt es mit dem vorgestellten Verfahren, nicht nur bei Vorlage der einen Komponente die andere Tialitkomponente homogen aufzubringen, sondern auch weitere notwendige Zusätze in der gleichen Weise spezifisch auf das vorgelegte Korn aufzufällen und so eine exakt stöchiometrische Verteilung der Elemente im $\mu$m-Bereich zu gewährleisten.

Dies führt zu einer Verbesserung der thermomechanischen Eigenschaften wie der Bruchdehnung.

Da das stöchiometrische Verhältnis auf mikroskopischer Ebene fixiert ist, kann im Gegensatz zu den Pulvermischungen keine Entmischung bei der Verarbeitung erfolgen. Die Kontrolle über die Ausgangskorngröße sowie die Optimierung der Packungsdichte werden erheblich erleichtert.

Um den Vorteil der kurzen Transportwege beim Reaktionssintern auszunutzen zu können, sollten die Kernteilchen eine Größe vor der Auffällung zwischen 0,005 $\mu$m und 10 $\mu$m, vorzugsweise zwischen 0,01 $\mu$m und 2 $\mu$m aufweisen und gegebenenfalls vor Reaktion einer geeigneten Mahlbehandlung unterworfen werden. Ferner ist darauf zu achten, daß vor Fällung nach gängigen Methoden eine geeignete Dispergierung der Kernpartikel erfolgt. Als Kernteilchen können entweder $TiO_2$-Partikel wie feinteiliges $TiO_2$, kalziniertes $TiO_2$ in Form von Anatas oder Rutil sowie Hydrolysatschlamm aus der üblichen Pigmentproduktion oder im umgekehrten Fall eine der bekannten $Al(OH)_3$-, $AlOOH$- bzw. $Al_2O_3$-Modifikationen, vorzugsweise $\alpha$-$Al_2O_3$, eingesetzt werden. Als Ausgangsreagentien zur Fällung dienen wäßrige Lösungen der Elementsulfate, - chloride, -nitrate bzw. Alkalielementhydroxid-Lösungen wie z.B. $NaAl(OH)_4$ oder $Na_2Si(OH)_6$ bzw. entsprechende Sole wie Aluminiumhydroxidsol oder Kieselsol. Im Gegensatz zu den zitierten Verfahren des Standes der Technik kann überraschenderweise auf den Einsatz der viel zu teueren Elementalkoxyverbindungen sowie, damit verbunden, auf den Einsatz organischer Lösungsmittel vollständig verzichtet werden, - ein erheblicher Vorteil sowohl aus wirtschaftlicher als auch ökologischer Sicht. Die Salzlösungen zur Fällung sind in hoher Konzentration einsetzbar.

Vorzugsweise erfolgt die Auffällung bei Vorliegen eines Aluminiumoxidkerns, indem die Aluminiumoxidsuspension sowie die Salzlösungen der fällbaren Zusätze langsam erhitzt und gegebenenfalls anschließend mit einer Base der pH-Wert der Suspension erhöht wird. Durch dieses Vorgehen erzielt man ein sehr homogenes, dichtes sowie vollständiges Aufwachsen auf die vorgelegten Teilchen. Alternativ hierzu können die Salzlösungen des Titans sowie der Zusätze in eine 70 bis 105 °C heiße, mit einer gängigen Säure auf pH 1 gestellte Aluminiumoxidsuspension zugetropft werden. Gegebenenfalls ist es vorteilhaft, dabei diese Salzlösung mit einem bei der Pigmentproduktion üblicherweise eingesetzten Titandioxidhydratkeim zu versehen.

Im Fall eines Titanoxidkerns werden bevorzugt die schwerlöslichen Verbindungen des Aluminiums sowie der weiteren Komponenten bei einem pH-Wert zwischen 5 und 8 und einer Temperatur oberhalb 50°C aus den entsprechenden Salzlösungen aufgebracht. Hierbei wird die Al-Komponente vorzugsweise durch kombiniertes Zutropfen einer $Al_2(SO_4)_3$- und einer $NaAl(OH)_4$-Lösung gefällt. Zur exakten pH-Steuerung können wahlweise gängige Säuren oder Basen eingesetzt werden. Wiederum ist bei Einhaltung dieser Parameter eine sehr homogene, vollständige Auffällung gewährleistet.

Nach Reaktion werden die Fällungsprodukte vorzugsweise filtriert und gewaschen, wobei gegebenenfalls bei der Fällung zugesetzte Alkaliionen nach vorheriger Einstellung auf einen pH-Wert zwischen 3,5 und 6 bis auf einen Restgehalt <0,1 % ausgewaschen werden. Die eingesetzten Anionen können entweder durch einen zweiten Filtrations-und Waschschritt zwischen pH 7 und 12 weitgehend eliminiert bzw. durch anschließende Kalzination entfernt werden.

Anschließend erfolgt eine Trocknung, bevorzugt eine Sprühtrocknung.

Vorzugsweise schließt sich eine Kalzination bei Temperaturen zwischen 400 und 1250°C, vorzugsweise im Fall des Aluminiumoxidkerns zwischen 800 und 1100°C und im Fall des Titanoxidkerns zwischen 1050 und 1200°C an, wobei eine BET-Oberfläche zwischen 30 $m^2/g$ und 1 $m^2/g$ eingestellt wird.

Durch das Einhalten dieser BET-Oberflächenwerte wird bei der späteren Sinterung eine Schwindung < 20 % gewährleistet und gegebenenfalls flüchtige Bestandteile entfernt. Vorzugsweise erfolgt dann eine Mikronisierung, wie z.B. eine Dampfstrahlmahlung.

Gute Ergebnisse werden auch dadurch erreicht, daß die Suspension nach Auffällung bzw. nach Waschung bei Temperaturen oberhalb 700°C in einem Heißgassprühreaktor vorzugsweise unter starker Verwirbelung behandelt wird.

Die erfindungsgemäßen Rohstoffe können dann vorteilhaft unter Einsatz bekannter keramischer Verfahren zu Grünkörpern geformt werden und dann zu Sinterkörpern versintert werden.

Da die Brenndauer weitgehend durch die Geschwindigkeit von Transportvorgängen während der Reaktion bestimmt wird, lassen sich die Brennzeiten mit den erfindungsgemäßen Rohstoffpulvern aufgrund der kurzen Transportwege verkürzen und damit die entsprechenden Kosten senken.

Eine bevorzugte Ausführungsform des erfindungsgemäßen Verfahrens besteht darin, daß das erhaltene Rohstoffpulver naß auf eine $d_{50}$-Teilchengröße < 2 $\mu$m desagglomeriert wird und ein Grünkörper geformt wird, der eine Gründichte von mindestens 1,7 $g/cm^3$ aufweist und bei einer Haltezeit von 0,5 bis 100 h, vorzugsweise zwischen 1 und 20 h, und bei Temperaturen zwischen 1250°C und 1650°C, bevorzugt zwischen 1300 und 1550°C, gesintert wird.

Mit dem erfindungsgemäß durch Auffällung erzeugten Pulvern läßt sich auf mikroskopioscher Ebene eine deutlich höhere Gefügehomogenität des Werkstoffes nach Sinterung erzeugen, die auf der sehr homogenen Verteilung der einzelnen Komponenten im Fällungsprodukt beruht.

Gegenstand dieser Erfindung sind somit auch die erfindungsgemäßen Sinterformkörper, die dadurch gekennzeichnet sind, daß sie ein homogenes Politurgefüge aufweisen und bevorzugt eine oder weitere Phasen in homogener Verteilung enthalten. Die erfindungsgemäßen Sinterkörper sind bevorzugt reaktionsgesintert. Eine Vorsynthese zu einem dotierten Tialitpulver ist ebeno möglich.

Als Hauptphase enthalten sie bevorzugt Aluminiumtitanat. Sie sind weiterhin gekennzeichnet durch hohe Bruchdehnungswerte und hohe Bruchfestigkeitswerte. So ist es durchaus möglich, Sinterformkörper mit einer Bruchdehnung ($\sigma$/E) von > 1,8 %, bevorzugt 2 %, zur Verfügung zu stellen. Die Bruchfestigkeiten liegen bis > 20 MPa, bevorzugt > 45 MPa. Weiterhin weisen die erfindungsgemäßen Sinterformkörper bevorzugt Dichten von 2,4 bis 3,6 $g/cm^3$, vorzugsweise im Fall des Titanoxidkerns von 2,4 bis 3,3 $g/cm^3$, im Fall des Aluminiumoxidkerns von 2,8 bis 3,6 $g/cm^3$, auf.

Der mittlere thermische Längenausdehnungskoeffizient $\alpha$ beträgt von -0,5 bis 3,0 x $10^{-6} K^{-1}$ im Bereich von 20°C bis 1000°C.

Gegenstand dieser Erfindung ist auch die Verwendung der erfindungsgemäßen Sinterformkörper zur Herstellung von Teilen in Verbrennungsmotoren, insbesondere hohler, rohrartiger Metall-Keramik-Verbundkörper in der Abgasleitung oder zur Bewehrung von Motorkolben und Zylinderköpfen, zur Herstellung hohler, rohrartiger Körper zur Förderung flüssiger Metalle sowie gegebenenfalls nach einer Dotierung mit katalytisch wirkenden Substanzen als Katalysatorträger.

Im folgenden wird die Erfindung beispielhaft erläutert, ohne daß hierin eine Einschränkung zu sehen ist.

Beispiel 1

5,67 kg feinteiliges $\alpha$-$Al_2O_3$ (Alcoa XA 1000 SG) wird mit 20,93 kg einer Lösung, die 18,7 % $TiO_2$ und 0,41 % Fe als Sulfat enthält, versetzt und in 5 Stunden auf 100°C gebracht. Anschließend wird mit 16,8 kg 20 %iger Ammoniaklösung in 2 h auf pH 7,5 gestellt und 0,992 kg Kieselsol 300 (Handelsprodukt der Bayer AG) zugetropft. Nach Abkühlen wird filtriert, gewaschen, 1 h bei 1000°C kalziniert und in einer Dampfstrahlmühle mikronisiert.

Die Dispergierung des Pulvers zu einem wäßrigen Schlicker erfolgt in einer Trommelmühle unter Zugabe der üblichen Verflüssiger. Mittels Schlickerguß wird ein offener Kasten gegossen, aus welchem die Prüfstäbe, Abmessungen 50 x 5 x 3,5 mm nach dem Brand (1415°C, 5h) herausgesägt werden. Die kristallinen Phasen nach dem Brand wurden mittels Röntgendiffraktometrie bestimmt.

Beispiel 2

3,914 kg feinteiliges $TiO_2$ (Bayertitan T - Handelsprodukt der Bayer AG) wird dampfstrahlgemahlen und in einer 1,0 %igen $NaHCO_3$-Lösung als Puffer dispergiert (50 g $TiO_2$/l). Die Auffällung erfolgt bei konstantem pH 7,0 bei 80°C, wobei gleichzeitig 26,933 kg Lösung I, die 7,58 % $Al_2O_3$ und 0,32 % Fe als Sulfat enthält, 17,615 kg Lösung II, die 20,6 % $Al_2O_3$ als $NaAl(OH)_4$ enthält und 1,098 kg Lösung III, die 26,7 % $SiO_2$ als $Na_2Si(OH)_6$ enthält, in 2 Stunden zugegeben werden.

Nach Abkühlen wird mit NaOH auf pH 8,0 gebracht, filtriert und gewaschen, resuspendiert, mit $H_2SO_4$ auf pH 4,0 gestellt und erneut filtriert und gewaschen. Eine einstündige Kalzination bei 1150°C sowie eine Mikronisierung in der Dampfstrahlmühle schließen sich an. Weitere Aufarbeitung wie Beispiel 1, mit Ausnahme der geänderten Brennbedingung (1400°C, 5h).

Tabelle 1

| Beispiele | | |
|---|---|---|
| Ausgangszusammensetzung [Gew.-%] | Bsp. 1 | Bsp. 2 |
| $Al_2O_3$ | 55,8 | 55,3 |
| $TiO_2$ | 39,1 | 39,6 |
| $SiO_2$ | 2,7 | 2,7 |
| $Fe_2O_3$ | 1,3 | 1,3 |
| $Na_2O$ | <0,01 | 0,02 |
| $SO_4^{2-}$ | 0,01 | 0,01 |
| BET [$m^2$/g] | 13,6 | 23,9 |
| Kristalline Phasen nach dem Brand [Gew.-%] | | |
| $Al_{2-x}Fe_x TiO_5$ | 91 | 88 |
| Mullit | 8 | 12 |
| $Al_2O_3$ | <1 | <1 |
| $TiO_2$ | <1 | <1 |
| Eigenschaften | | |
| Sinterdichte [$g/cm^3$] | 3,40 | 2,65 |
| Schwindung beim Sintern [%] | 13,5 | 7,5 |
| Biegefestigkeit [MPa] | 61 | 46,2 |
| E-Modul [GPa] | 23 | 19,5 |
| WAK (RT - 1000°C) [$10^{-6} \frac{1}{K}$] | 1,9 | 2,1 |

**Patentansprüche**

**1.** Sinterbares Rohstoffprodukt für die Keramik auf Aluminiumtitanatbasis, bestehend aus Teilchen mit einem Oxid-, Oxidhydrat- und/oder Hydroxidkern der Elemente Aluminium oder Titan und einer Auffällung von schwerlöslichen Verbindungen des jeweils anderen Elementes, wobei das molare Verhältnis von Titan zu Aluminium von 1:0,1 bis 1:30 beträgt, dadurch gekennzeichnet, daß es zusätzlich Auffällungen einer oder mehrerer weiterer schwerlöslicher Elementverbindungen in einer Menge von 0,1 bis 65 Gew.-%, bevorzugt 0,2 bis 35 Gew.-%, berechnet als Elementoxid und bezogen auf die Gesamtmenge, enthält, wobei die schwerlöslichen Verbindungen der zusätzlichen Auffällung Oxide, Oxidhydrate und/oder Hydroxide der Elemente Magnesium, Kalzium, Silizium, Zinn, Yttrium, Zirkonium, Niob, Tantal, Eisen, Kobalt, Nickel, Chrom, Kupfer, Zink und/oder Seltenerdelemente sind.

2. Sinterbares Rohstoffpulver gemaß Anspruch 1, dadurch gekennzeichnet, daß es sich bei den Kernteilchen um $TiO_2$-Partikel wie feinteiliges Titandioxid bzw. Titandioxidhydrat, Hydrolysatschlamm aus der $TiO_2$-Pigment-Produktion bzw. kalziniertes Titandioxid in Form von Rutil oder Anatas handelt.

3. Sinterbares Rohstoffpulver gemäß Anspruch 1, dadurch gekennzeichnet, daß es sich bei den Kernteilchen um eine der Modifikationen von $Al(OH)_3$, AlOOH und/oder $Al_2O_3$ handelt.

4. Verfahren zur Herstellung des sinterbaren Rohstoffpulvers gemäß einem oder mehreren der Ansprüche 1 bis 3, wobei auf Oxid-, Oxidhydrat- und/oder Hydroxidkerne der Elemente Aluminium oder Titan eine Auffällung von schwerlöslichen Verbindungen des jeweils anderen Elementes aufgebracht ist und das molare Verhältnis von Titan zu Aluminium von 1:0,1 bis 1:30 beträgt, dadurch gekennzeichnet, daß zusätzlich Auffällungen einer oder mehrerer weiterer schwerlöslicher Elementverbindungen in einer Gesamtmenge von 0,1 bis 65 Gew.-%, bevorzugt 0,2 bis 35 Gew.-%, berechnet als Elementoxid und bezogen auf die Gesamtmenge, aufgebracht werden, wobei die schwerlöslichen Verbindungen der zusätzlichen Auffällung Oxide, Oxidhydrate und/oder Hydroxide der Elemente Magnesium, Kalzium, Silizium, Zinn, Yttrium, Zirkonium, Niob, Tantal, Eisen, Kobalt, Nickel, Chrom, Kupfer, Zink und/oder Seltenerdelemente sind.

5. Verfahren gemäß Anspruch 4, dadurch gekennzeichnet, daß eine Kalzinierung bei Temperaturen zwischen 400 und 1250 °C, vorzugsweise im Fall des Aluminiumoxidkerns zwischen 800 und 1100 °C und im Fall des Titanoxidkerns zwischen 1050 und 1250 °C, durchgeführt wird, wobei eine BET-Oberfläche zwischen 30 $m^2$/g und 1 $m^2$/g eingestellt wird.

6. Verfahren zur Herstellung eines Sinterformkörpers, dadurch gekennzeichnet, daß das gemäß einem der Ansprüche 4 oder 5 erhaltene Rohstoffpulver naß auf eine $d_{50}$-Teilchengröße <2 $\mu$m desagglomeriert und ein Grünkörper geformt wird, der eine Gründichte von mindestens 1,7 g/$cm^3$ aufweist und bei einer Haltezeit von 0,5 bis 100 h, vorzugsweise zwischen 1 und 20 h, und bei Temperaturen zwischen 1250 und 1650 °C, bevorzugt zwischen 1300 und 1550 °C, gesintert wird.

7. Sinterformkörper, erhältlich gemäß Anspruch 6, dadurch gekennzeichnet, daß der Sinterformkörper ein homogenes Politurgefüge aufweist und eine oder mehrere Phasen in homogener Verteilung enthält.

8. Verwendung der Sinterformkörper gemäß Anspruch 7 zur Herstellung von Teilen in Verbrennungsmotoren, insbesondere hohler, rohrartiger Metall-Keramik-Verbundkörper in der Abgasleitung oder zur Bewehrung von Motorkolben und Zylinderköpfen.

9. Verwendung der Sinterformkörper gemäß Anspruch 7 zur Herstellung hohler, rohrartiger Körper zur Förderung flüssiger Metalle.

10. Verwendung der Sinterformkörper gemäß Anspruch 7, gegebenenfalls nach einer Dotierung mit katalytisch wirkenden Substanzen, als Katalysatorträger.

**Claims**

1. Sinterable raw material product for ceramics based on aluminium titanate, consisting of particles having an oxide, oxihydrate and/or hydroxide core of the elements aluminium or titanium and a precipitation thereon of sparingly soluble compounds of the other element, the molar ratio of titanium to aluminium being from 1:0.1 to 1:30, characterised in that it contains, in addition, precipitations of one or more other sparingly soluble compounds of elements in a quantity of from 0.1 to 65% by weight, preferably from 0.2 to 35% by weight, calculated as elementary oxide and based on the total quantity, the sparingly soluble compounds of the additional precipitation being oxides, oxihydrates and/or hydroxides of the elements magnesium, calcium, silicon, tin, yttrium, zirconium, niobium, tantalum, iron, cobalt, nickel, chromium, copper, zinc and/or rare earth elements.

EP 0 357 959 B1

2. Sinterable raw material powder according to Claim 1, characterised in that the particles of the core are $TiO_2$ particles such as finely divided titanium dioxide or titanium oxyhydrate, hydrolysate sludge from the production of $TiO_2$ or calcined titanium dioxide in the form of rutile or anatase.

3. Sinterable raw material powder according to Claim 1, characterised in that the particles of the core consist of one of the modifications of $Al(OH)_3$, $AlOOH$ and/or $Al_2O_3$.

4. Process for the preparation of the sinterable raw material powder according to one or more of Claims 1 to 3 in which a precipitate of sparingly soluble compounds of aluminium or titanium is applied to the oxide, oxihydrate and/or hydroxide core of the other element, and a molar ratio of titanium to aluminium is from 1:0.1 to 1:30, characterised in that additional precipitations of one or more other sparingly soluble compounds of elements are applied in a total quantity of from 0.1 to 65% by weight, preferably from 0.2 to 35% by weight, calculated as oxide of the element and based on the total quantity, the sparingly soluble compounds of the additional precipitation consisting of oxides, oxyhydrates and/or hydroxides consisting of the elements magnesium, calcium, silicon, tin, yttrium, zirconium, niobium, tantalum, iron, cobalt, nickel, chromium, copper, zinc and/or rare earth elements.

5. A process according to Claim 4, characterised in that calcining is carried out at temperatures of from 400 to 1250°C, preferably from 800 to 1100°C in the case of the aluminium oxide core and from 1050 to 1250°C in the case of the titanium oxide core, the BET-surface area being adjusted to a value from 30 $m^2/g$ to 1 $m^2/g$.

6. A process for the preparation of a sintered article, characterised in that the raw material powder obtained according to one of the Claims 4 or 5 is disagglomerated wet to a $d_{50}$ particle size of <2 $\mu$m and a green body is formed which has a green density of at least 1.7 $g/cm^3$ and is sintered for a residence time of from 0.5 to 100 h, preferably from 1 to 20 h, at temperatures from 1250 to 1650°C, preferably from 1300 to 1550°C.

7. Sintered products obtainable according to Claim 6, characterised in that the sintered product has a homogeneously smooth surface and contains one or more phases in homogeneous distribution.

8. Use of the sintered products according to Claim 7 for the production of parts in combustion engines, in particular hollow, tubular metal-ceramic composite articles in the exhaust pipe or for the covering of engine pistons and cylinder heads.

9. Use of the sintered products according to Claim 7 for the production of hollow, tubular articles for the conduction of liquid metals.

10. Use of the sintered products according to Claim 7 as catalyst carriers, optionally after a doping with catalytically active substances.

**Revendications**

1. Matière première frittable pour la céramique à base de titanate d'aluminium, consistant en particules à noyau d'oxyde, d'oxyde hydraté et/ou d'hydroxyde des éléments aluminium ou titane sur lesquels on a précipité des composés peu solubles de l'autre de ces deux éléments, le rapport molaire titane/aluminium allant de 1:0,1 à 1:30, caractérisée en ce que l'on a en outre précipité un ou plusieurs composés peu solubles d'autres éléments en quantité de 0,1 à 65 % en poids, de préférence de 0,2 à 35 % en poids, exprimée en oxyde de l'élément et par rapport à la quantité totale, les composés peu solubles de la précipitation supplémentaire étant des oxydes, des oxydes hydratés et/ou des hydroxydes des éléments magnésium, calcium, silicium, étain, yttrium, zirconium, niobium, tantale, fer, cobalt, nickel, chrome, cuivre, zinc et/ou éléments des terres rares.

2. Matière première en poudre frittable selon revendication 1, caractérisée en ce que les particules de noyau sont des particules de $TiO_2$, par exemple des fines particules de dioxyde de titane ou de dioxyde de titane hydraté, de boues d'hydrolyse de la production industrielle du $TiO_2$ pigmentaire ou de dioxyde de titane calciné à l'état de rutile ou d'anatase.

7

3. Matière première en poudre frittable selon revendication 1, caractérisée en ce que les particules de noyau consistent en l'une des formes physiques d'$Al(OH)_3$, d'AlOOH et/ou d'$Al_2O_3$.

4. Procédé de préparation de la matière première en poudre frittable selon une ou plusieurs des revendications 1 à 3, dans lequel, sur des noyaux d'oxyde, d'oxyde hydraté et/ou d'hydroxyde des éléments aluminium ou titane, on applique par précipitation des dérivés peu solubles de l'autre de ces éléments, et le rapport molaire titane/aluminium va de 1:0,1 à 1:30, caractérisé en ce que l'on applique en outre par précipitation un ou plusieurs composés peu solubles d'autres éléments en quantité totale de 0,1 à 65 % en poids, de préférence de 0,2 à 35 % en poids, exprimée en oxyde des éléments et par rapport à la quantité totale, les composés peu solubles de cette précipitation supplémentaire étant des oxydes, des oxydes hydratés et/ou des hydroxydes des éléments magnésium, calcium, silicium, étain, yttrium, zirconium, niobium, tantale, fer, cobalt, nickel, chrome, cuivre, zinc et/ou des éléments des terres rares.

5. Procédé selon revendication 4, caractérisé en ce que l'on procède à une calcination à des températures de 400 à 1 250 °C, de préférence de 800 à 1 100 °C dans le cas de noyaux d'alumine et de 1 050 à 1 250 °C dans le cas des noyaux d'oxyde de titane, en réglant à une surface BET de 30 $m^2$/g à 1 $m^2$/g.

6. Procédé de préparation d'un corps moulé et fritté, caractérisé en ce que l'on désagglomère au mouillé la matière première en poudre obtenue selon une des revendications 4 ou 5 jusqu'à une dimension de particules $d_{50}$ inférieure à 2 $\mu$m et on moule un corps cru ayant une densité à cru d'au moins 1,7 g/$cm^3$ et, après une durée de conservation de 0,5 à 100 h, de préférence de 1 à 20 h, on fritte à des températures de 1 250 à 1 650 °C, de préférence de 1 300 à 1 550 °C.

7. Corps moulé et fritté obtenu selon revendication 6, caractérisé en ce qu'il présente un squelette homogène au polissage et contient une ou plusieurs phases en répartition homogène.

8. Utilisation du corps moulé fritté selon revendication 7 pour la fabrication de pièces dans des moteurs à combustion, en particulier des corps composites tubulaires creux du type métal-céramique pour l'échappement des gaz, ou pour l'armature de pistons de moteurs et de têtes de cylindres.

9. Utilisation des corps frittés et moulés selon revendication 7 pour la fabrication de corps tubulaires creux pour le transport de métaux fondus.

10. Utilisation des corps frittés et moulés selon revendication 7, éventuellement après addition de substances possédant une activité catalytique, en tant que supports de catalyseurs.